# FASCICULE DE BREVET EUROPEEN

(11) **EP 2 235 347 B1**
(45) Date de publication et mention de la délivrance du brevet: **29.06.2011**
(21) Numéro de dépôt: 08870814.4
(22) Date de dépôt: 10.12.2008
(51) Int. Cl.: F02D 41/04, F02D 41/02

(54) **PROCEDE DE GESTION DE REGENERATION D' UN PIEGE A OXYDES D' AZOTE**
VERFAHREN ZUR HANDHABUNG DER REGENERIERUNG EINER STICKOXIDFALLE
METHOD FOR MANAGING THE REGENERATION OF A NITROGEN OXIDE TRAP

(30) Priorité: 11.01.2008 FR 0850147
(43) Date de publication de la demande: 06.10.2010
(73) Titulaire: Renault S.A.S., 92100 Boulogne-Billancourt (FR)
(72) Inventeur: BARRILLON, PASCAL, F-92100 Issy Les Moulineaux (FR); D'ORIA, SEBASTIEN, F-75015 Paris (FR)
(86) Numéro de dépôt international: PCT/EP2008/067237
(87) Numéro de publication internationale: WO 2009/089967

(56) Documents cités:
- EP-A- 1 361 354
- EP-A- 1 568 872
- EP-A- 1 736 658
- FR-A- 2 862 087

## Description

La présente invention concerne, de façon générale, le domaine des moteurs à combustion interne de véhicule automobile, tel qu'un moteur diesel à injection directe.

Plus précisément, l'invention concerne, selon un premier de ses aspects, un procédé de gestion d'un piège à oxydes d'azote placé dans une ligne d'échappement d'un moteur à combustion interne d'un véhicule automobile.

L'invention a pour objet la prise en compte de la dilution de l'huile de lubrification du moteur pour autoriser les régénérations du piège à oxydes d'azote, autrement appelé piège NOx.

La dilution du carburant dans l'huile utilisée pour la lubrification des moteurs à combustion interne a toujours existé, mais en quantité infime.

L'avènement de nouveaux dispositifs de dépollution sur les moteurs diesel, comme le filtre à particules ou le piège NOx, afin de satisfaire les réglementations européennes, engendre des modifications ponctuelles des stratégies d'injection du diesel dans les cylindres du moteur, qui ont pour conséquence des augmentations notables de la dilution de l'huile par le carburant.

En effet, le carburant injecté très tard après le point mort haut, pendant la phase de détente, également appelée post-injection, est brûlé dans la ligne d'échappement afin de déclencher les réactions de combustion des suies accumulées au niveau des dispositifs de post-traitement. Le carburant post-injecté sert aussi à permettre certaines réactions de réduction des polluants au niveau de ces mêmes dispositifs.

Or, une partie de ce carburant se dilue dans l'huile de lubrification du moteur, altérant le rôle de protection de cette dernière. A tel point que ce paramètre doit être surveillé afin de ne pas mettre en péril l'intégrité du moteur. Le document EP 1 568 872 A divulgue un procédé qui répond à ce problème.

L'augmentation de la dilution du carburant dans l'huile entraîne une réduction de l'intervalle de vidange, ce qui augmente le temps et le coût que doit consacrer un automobiliste à l'entretien de son véhicule.

Actuellement, les solutions mises en place limitent le taux de dilution de l'huile en réduisant la fréquence des régénérations des dispositifs de post-traitement des gaz d'échappement, tels que le piège NOx. Le taux de dilution de l'huile est évalué et ce taux évalué influence l'autorisation de déclenchement des régénérations. Le fait de maintenir le taux de dilution inférieur à une limite permet d'assurer une lubrification suffisante au sein du moteur.

L'invention a pour but d'améliorer les procédés de gestion connus du piège NOx, en fonction en particulier du taux de dilution de l'huile de lubrification, afin d'avoir une meilleure maîtrise de l'intervalle de vidange.

A cette fin, l'invention concerne un procédé de gestion d'un piège à oxydes d'azote placé dans une ligne d'échappement d'un moteur à combustion interne d'un véhicule automobile, ledit piège étant adapté à subir des régénérations de différents types prédéfinis distincts entre eux, ledit procédé comprenant les opérations suivantes :
a- on initialise un compteur à une valeur de base; puis
b- on évalue un taux de dilution d'une huile de lubrification du moteur, par un carburant d'alimentation du moteur, en fonction d'un paramètre de fonctionnement de ce moteur ;
c- on incrémente le compteur à chaque fois que le taux de dilution évalué devient supérieur à une courbe-limite haute de taux de dilution,
d- on décrémente le compteur à chaque fois que le taux de dilution évalué devient inférieur à une courbe-limite basse de taux de dilution, lesdites courbes-limites haute et basse de taux de dilution étant pré-calibrées en fonction dudit paramètre de fonctionnement,
e- tant que le taux de dilution évalué reste supérieur à la courbe-limite haute de taux de dilution, on interdit toute régénération du piège qui n'est pas en cours au moment où le taux de dilution évalué dépasse cette courbe-limite haute ; et
f- tant que le taux de dilution évalué est inférieur à la courbe-limite haute de taux de dilution et que le compteur est supérieur à sa valeur de base, on interdit au moins un des types de régénération du piège.

L'invention propose donc une interdiction variable des régénérations qui permet d'empêcher une dilution trop rapide de l'huile et donc d'assurer un intervalle de vidange minimal tout en maintenant une activité partielle des régénérations du piège NOx.

On entend par « régénération » ou « purge » la phase pendant laquelle un dispositif de post-traitement des gaz d'échappement tel qu'un piège NOx subit des réactions adéquates pour éliminer les polluants accumulés au niveau de ce dispositif pendant une phase de stockage.

L'évaluation du taux de dilution de l'huile de lubrification peut se faire par tout modèle connu.

A titre d'exemple, on distingue deux grands types de régénération du piège NOx qui sont les purges de réduction des NOx stockés, autrement appelées purges déNOx, et les purges de désulfatation, autrement appelées purges déSOx.

Dans un mode de réalisation particulier de l'invention, les différents types de régénération sont prédéfinis en fonction de conditions de roulage du véhicule qui sont par exemple relevées par une unité de contrôle électronique du moteur.

Notamment, parmi les conditions de roulage du véhicule, on peut distinguer le milieu urbain, l'autoroute, et les conditions intermédiaires dite sur route.

L'unité de contrôle électronique du moteur peut comprendre également un automate destiné à la gestion du piège NOx.

De manière avantageuse, des valeurs du compteur correspondent chacune de manière prédéfinie à une requête d'interdiction d'au moins un des types de régénération du piège, ladite interdiction étant mise en oeuvre dans l'opération f.

On entend par « requête d'interdiction » une commande automatique de gestion du piège NOx visant à bloquer une ou plusieurs fonctions de ce piège. Une telle requête est par exemple faite par un automate de gestion du piège NOx.

De préférence, plus une valeur donnée du compteur est proche de la valeur de base du compteur, plus le type de régénération, qui est interdit par la requête d'interdiction correspondant à ladite valeur donnée du compteur, est un type de régénération participant à augmenter le taux de dilution de l'huile.

Selon une version préférée de l'invention, une première valeur du compteur correspond de manière prédéfinie à une requête d'interdiction d'une régénération du type désulfatation, ou déSox, en milieu urbain ; une deuxième valeur du compteur correspond de manière prédéfinie à une requête d'interdiction d'une régénération du type désulfatation sur route ; une troisième valeur du compteur correspond de manière prédéfinie à une requête d'interdiction d'une régénération du type désulfatation par anticipation sur autoroute ; une quatrième valeur du compteur correspond de manière prédéfinie à une requête d'interdiction d'une régénération du type désulfatation par anticipation thermique ; et une cinquième valeur du compteur correspond de manière prédéfinie à une requête d'interdiction d'une régénération du type dénitrification, ou déNox.

Tout préférentiellement, la cinquième valeur du compteur est supérieure à la quatrième, qui est elle-même supérieure à la troisième, elle-même supérieure à la deuxième, qui est supérieure à la première valeur du compteur.

Avantageusement, la requête d'interdiction correspondant à une valeur donnée du compteur se cumule avec au moins une des requêtes d'interdiction correspondant à au moins une valeur du compteur inférieure à cette valeur donnée du compteur.

Le paramètre de fonctionnement du moteur est par exemple la distance parcourue par le véhicule depuis la dernière vidange. Ce peut être aussi le temps écoulé depuis la dernière vidange

Le compteur prend de préférence comme valeurs des nombres entiers positifs.

L'invention concerne également une utilisation du procédé selon l'invention, pour maintenir l'intervalle entre deux vidanges successives d'une huile de lubrification du moteur à une valeur minimale prédéterminée à l'aide du paramètre de fonctionnement du moteur, ladite utilisation comprenant, à chaque vidange de l'huile de lubrification, l'initialisation du compteur à sa valeur de base et une mise à zéro du taux de dilution.

D'autres caractéristiques et avantages de l'invention ressortiront clairement de la description détaillée qui en est faite ci-après, à titre indicatif et nullement limitatif, en référence aux dessins annexés dans desquels :
- la figure 1 représente un graphique du taux de dilution évalué en fonction d'un paramètre de fonctionnement d'un moteur ;
- la figure 2 représente un agrandissement de la zone rectangulaire délimitée par une ligne discontinue sur la figure 1.

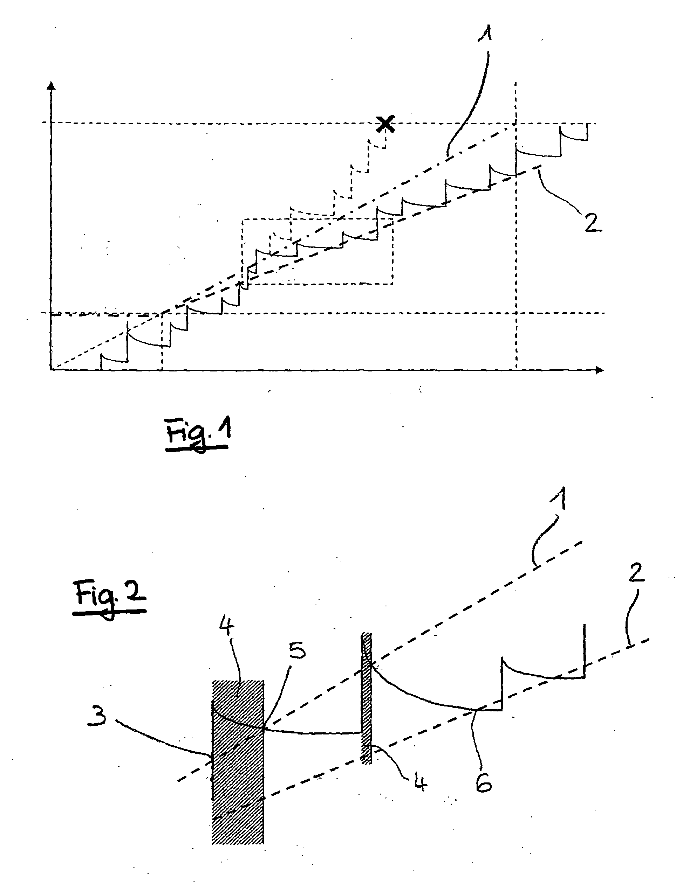

La figure 1 représente plus précisément l'évolution du taux de dilution de l'huile de lubrification, exprimé en %, en fonction de la distance parcourue par un véhicule automobile, exprimée par exemple en kilomètres.

Deux courbes-limites ont été pré-calibrées afin d'imposer une évolution satisfaisante de la dilution de l'huile : une courbe-limite haute 1 et une courbe-limite basse 2.

Lorsque le taux de dilution évalué de l'huile dépasse la courbe-limite haute 1 pour le kilométrage courant, tel que par exemple au point 3 sur la figure 2, on incrémente le compteur d'une unité.

Quelque soit l'amplitude du franchissement de cette courbe-limite haute, on laisse toute opération en cours de régénération du piège NOx se terminer.

Au niveau des zones 4 hachurées sur la figure 2, Une interdiction totale de nouvelle purge du piège NOx est activée tant que le taux de dilution évalué reste supérieur à la courbe-limite haute 1, afin de faciliter l'évaporation du carburant dilué dans l'huile.

Toutefois, la possibilité peut être donnée de choisir les types de régénération concernés par cette interdiction totale.

Lorsque le taux de dilution évalué devient inférieur à la courbe-limite haute 1, par exemple au point 5 sur la figure 2, les types de régénération autorisés par la valeur en cours du compteur peuvent être réalisés.

Lorsque le taux de dilution évalué devient inférieur à la courbe-limite basse 2, par exemple au point 6, le compteur est décrémenté d'une unité, ce qui autorise la réalisation du ou des types de régénération jusqu'alors interdits.

Selon la valeur en cours du compteur, l'automate de gestion du piège NOx interdit certains types de régénération. Par exemple, lorsque la valeur du compteur égal 1, les déSox urbaines, qui contribuent fortement à la dilution de l'huile sans être très efficaces pour supprimer les oxydes de soufre, ou SOx, du piège NOx, sont prohibées.

On peut définir six valeurs de compteur, conditionnant l'autorisation des différentes purges du piège NOx, telles que :
- 0 : aucune purge interdite ;
- 1 : déSOx urbaine interdite ;
- 2 : déSOx sur route interdite ;
- 3 : déSOx par anticipation sur autoroute interdite ;
- 4 : déSOx par anticipation thermique, c'est-à-dire après régénération du filtre à particules, interdite ;
- 5 : déNOx interdite.

De 0 à 5, les types de régénération vont de la plus pénalisante à la plus favorable vis-à-vis de la dilution de l'huile.

La valeur de base du compteur, correspondant à un taux de dilution de l'huile nul, est la valeur 0 (zéro).

L'interdiction mentionnée à chaque valeur "n" du compteur est de préférence cumulée avec les interdictions correspondant aux valeurs inférieures du compteur.

L'utilisation du modèle de dilution donne un taux de dilution instantané.

A chaque vidange de l'huile de lubrification, le taux de dilution ainsi que le compteur sont réinitialisés.

La valeur du compteur peut être enregistrée en permanence et rapportée au kilométrage auquel elle est relevée. On peut de plus relever le nombre d'incrémentations du compteur qui ont eu lieu.

Pour le diagnostic en après-vente du véhicule automobile, on peut enregistrer :
- le kilométrage relatif à la première incrémentation du compteur ;
- le nombre d'incrémentations ; et
- les vingt dernières incrémentations du compteur, avec, pour chacune, la valeur du compteur et le kilométrage correspondants.

Ces données sont dans ce cas réinitialisées à chaque vidange.

En plus du compteur principal décrit ci-dessus, on peut utiliser un compteur de purges déNOx. A l'instar de la courbe de taux de dilution, on définit par simulation une courbe d'évolution normale du nombre de purges déNOx en fonction du kilométrage. En s'appuyant sur celle-ci, on peut alors définir une courbe-limite, définissant un nombre anormal de régénérations. Si le nombre de purges est trop élevé, on suspend le déclenchement des purges déNOx quelque soit la valeur du compteur principal.

Les avantages de l'invention par rapport aux solutions connues sont d'une part une interdiction temporaire des régénérations en vue de respecter un intervalle de vidange de l'huile de lubrification du moteur personnalisé minimal ou de protéger le moteur sur l'intervalle de vidange programmé, et d'autre part la considération de plusieurs niveaux de gravité de la dilution de l'huile, par l'intermédiaire des différentes valeurs prises par le compteur, autorisant des régénérations du piège NOx différentes.

Cette invention est susceptible d'être utilisée sur toute motorisation équipée de dispositifs de post-traitement des gaz d'échappement et effectuant des post-injections de carburant dans la chambre de combustion.

## Revendications

1. Procédé de gestion d'un piège à oxydes d'azote placé dans une ligne d'échappement d'un moteur à combustion interne d'un véhicule automobile, ledit piège étant adapté à subir des régénérations de différents types prédéfinis distincts entre eux, ledit procédé comprenant les opérations suivantes :
a- on initialise un compteur à une valeur de base; puis
b- on évalue un taux de dilution d'une huile de lubrification du moteur, par un carburant d'alimentation du moteur, en fonction d'un paramètre de fonctionnement de ce moteur ;
c- on incrémente le compteur à chaque fois que le taux de dilution évalué devient supérieur à une courbe-limite haute (1) de taux de dilution,
d- on décrémente le compteur à chaque fois que le taux de dilution évalué devient inférieur à une courbe-limite basse (2) de taux de dilution, lesdites courbes-limites haute (1) et basse (2) de taux de dilution étant pré-calibrées en fonction du dit paramètre de fonctionnement,
e- tant que le taux de dilution évalué reste supérieur à la courbe-limite haute (1) de taux de dilution, on interdit toute régénération du piège qui n'est pas en cours au moment où le taux de dilution évalué dépasse cette courbe-limite haute (1) ;
f- tant que le taux de dilution évalué est inférieur à la courbe-limite haute (1) de taux de dilution et que le compteur est supérieur à sa valeur de base, on interdit au moins un des types de régénération du piège.

2. Procédé selon la revendication 1, dans lequel les différents types de régénération sont prédéfinis en fonction de conditions de roulage du véhicule qui sont par exemple relevées par une unité de contrôle électronique du moteur.

3. Procédé selon la revendication 1 ou 2, dans lequel des valeurs du compteur correspondent chacune de manière prédéfinie à une requête d'interdiction d'au moins un des types de régénération du piège, ladite interdiction étant mise en oeuvre dans l'opération f.

4. Procédé selon la revendication 3, dans lequel plus une valeur donnée du compteur est proche de la valeur de base du compteur, plus le type de régénération, qui est interdit par la requête d'interdiction correspondant à ladite valeur donnée du compteur, est un type de régénération participant à augmenter le taux de dilution de l'huile.

5. Procédé selon la revendication 3 ou 4, dans lequel une première valeur du compteur correspond de manière prédéfinie à une requête d'interdiction d'une régénération du type désulfatation, ou DéSox, en milieu urbain ; une deuxième valeur du compteur, supérieure à la première, correspond de manière prédéfinie à une requête d'interdiction d'une régénération du type désulfatation sur route ; une troisième valeur du compteur, supérieure à la deuxième, correspond de manière prédéfinie à une requête d'interdiction d'une régénération du type désulfatation par anticipation sur autoroute ; une quatrième valeur du compteur, supérieure à la troisième, correspond de manière prédéfinie à une requête d'interdiction d'une régénération du type désulfatation par anticipation thermique ; et une cinquième valeur du compteur, supérieure à la quatrième, correspond de manière prédéfinie à une requête d'interdiction d'une régénération du type dénitrification, ou DéNox.

6. Procédé selon l'une quelconque des revendications 3 à 5, dans lequel la requête d'interdiction correspondant à une valeur donnée du compteur se cumule avec au moins une des requêtes d'interdiction correspondant à au moins une valeur du compteur inférieure à cette valeur donnée du compteur.

7. Procédé selon l'une quelconque des revendications 1 à 6, dans lequel le paramètre de fonctionnement du moteur est la distance parcourue par le véhicule.

8. Procédé selon l'une quelconque des revendications 1 à 7, dans lequel le compteur prend comme valeurs des nombres entiers positifs.

9. Utilisation du procédé tel que décrit dans l'une quelconque des revendications 1 à 8, pour maintenir l'intervalle entre deux vidanges successives d'une huile de lubrification du moteur à une valeur minimale prédéterminée à l'aide du paramètre de fonctionnement du moteur, ladite utilisation comprenant, à chaque vidange de l'huile de lubrification, l'initialisation du compteur à sa valeur de base et une mise à zéro du taux de dilution.

## Claims

1. Method for managing a nitrogen oxide trap placed in an exhaust line of an internal combustion engine of a motor vehicle, the said trap being suitable for sustaining regenerations of different predefined types distinct from one another, the said method comprising the following operations:
a - a meter is set at a low value; then
b - a rate of dilution of an engine lubrication oil by an engine supply fuel is evaluated as a function of an operating parameter of this engine;
c - the meter is incremented each time that the evaluated dilution rate becomes greater than a top limit curve (1) of dilution rate,
d - the meter is decremented each time that the evaluated dilution rate becomes less than a bottom limit curve (2) of dilution rate, the said top limit curve (1) and bottom limit curve (2) of dilution rate being precalibrated as a function of the said operating parameter,
e - while the evaluated dilution rate remains greater than the top limit curve (1) of dilution rate, any regeneration of the trap that is not in progress at the time when the evaluated dilution rate exceeds this top limit curve (1) is prevented;
f - while the evaluated dilution rate is below the top limit curve (1) of dilution rate and the meter is greater than its base value, at least one of the trap regeneration types is prevented.

2. Method according to Claim 1, in which the various types of regeneration are predefined as a function of running conditions of the vehicle that are for example registered by an electronic control unit of the engine.

3. Method according to Claim 1 or 2, in which the values of the meter each correspond in a predefined manner to a request for prevention of at least one of the trap regeneration types, the said prevention being applied in operation f.

4. Method according to Claim 3, in which the closer a given value of the meter is to the base value of the meter, the more the regeneration type, that is prevented by the prevention request corresponding to the said given value of the meter, is a regeneration type helping to increase the dilution rate of the oil.

5. Method according to Claim 3 or 4, in which a first value of the meter corresponds in a predefined manner to a request to prevent a regeneration of the desulphurization, or DeSox, type in an urban environment; a second value of the meter, greater than the first, corresponds in a predefined manner to a request to prevent a regeneration of the desulphurization type on open road; a third value of the meter, greater than the second, corresponds in a predefined manner to a request to prevent a regeneration of the advanced desulphurization type on a motorway; a fourth value of the meter, greater than the third, corresponds in a predefined manner to a request to prevent a regeneration of the thermal advanced desulphurization type; and a fifth value of the meter, greater than the fourth, corresponds in a predefined manner to a request to prevent a regeneration of the denitrification, or DeNox, type.

6. Method according to any one of Claims 3 to 5, in which the prevention request corresponding to a given value of the meter is added to at least one of the prevention requests corresponding to at least one value of the meter below this given value of the meter.

7. Method according to any one of Claims 1 to 6, in which the operating parameter of the engine is the distance travelled by the vehicle.

8. Method according to any one of Claims 1 to 7, in which the meter takes positive whole numbers as values.

9. Use of the method as described in any one of Claims 1 to 8 in order to keep the interval between two successive changes of lubricating oil of the engine at a predetermined minimum value with the aid of the engine operating parameter, the said use comprising, at each change of lubricating oil, the setting of the meter at its base value and a zeroing of the dilution rate.

## Patentansprüche

1. Verfahren zum Steuern einer Stickoxidfalle, die in einer Abgasleitung einer Brennkraftmaschine eines Kraftfahrzeugs angeordnet ist, wobei die Falle dazu ausgelegt ist, Regenerationen unterschiedlichen Typs, die voneinander verschieden und im Voraus definiert sind, unterworfen zu werden, wobei das Verfahren die folgenden Operationen umfasst:
a - Initialisieren eines Zählers auf einen Basiswert; dann
b - Bewerten eines Verdünnungsanteils eines Schmieröls der Maschine durch einen Kraftstoff für die Versorgung der Maschine als Funktion eines Funktionsparameters dieser Maschine;
c - Inkrementieren des Zählers jedes Mal, wenn der bewertete Verdünnungsanteil größer als eine obere Grenzkurve (1) des Verdünnungsanteils wird,
d - Dekrementieren des Zählers jedes Mal, wenn der bewertete Verdünnungsanteil kleiner als eine untere Grenzkurve (2) des Verdünnungsanteils wird, wobei die obere Grenzkurve (1) und die untere Grenzkurve (2) des Verdünnungsanteils als Funktion des Funktionsparameters im Voraus kalibriert werden,
e - solange der bewertete Verdünnungsanteil über der oberen Grenzkurve (1) des Verdünnungsanteils liegt, Sperren jeglicher Regeneration der Falle, die zu dem Zeitpunkt, zu dem der bewertete Verdünnungsanteil diese obere Kurve (1) überschreitet, erfolgt;
f - solange der bewertete Verdünnungsanteil unter der oberen Grenzkurve (1) des Verdünnungsanteils liegt und der Zähler größer als der Basiswert ist, Sperren wenigstens eines der Typen für die Regeneration der Falle.

2. Verfahren nach Anspruch 1, wobei die verschiedenen Regenerationstypen im Voraus als Funktion von Fahrbedingungen des Fahrzeugs definiert werden, die beispielsweise von einer elektronischen Steuereinheit der Maschine abgefragt werden.

3. Verfahren nach Anspruch 1 oder 2, wobei die Werte des Zählers jeweils auf im Voraus definierte Weise einer Anforderung zum Sperren wenigstens eines der Regenerationstypen der Falle entsprechen, wobei die Sperre in der Operation f ausgeführt wird.

4. Verfahren nach Anspruch 3, wobei, je näher sich ein gegebener Wert des Zählers bei dem Basiswert des Zählers befindet, desto eher ist der Regenerationstyp, der durch die dem gegebenen Typ des Zählers entsprechenden Sperranforderung gesperrt ist, ein Regenerationstyp, der dazu beiträgt, den Verdünnungsanteil des Öls zu erhöhen.

5. Verfahren nach Anspruch 3 oder 4, wobei ein erster Wert des Zählers auf im Voraus definierte Weise einer Sperranforderung eines Desulfatierungstyps oder DeSox-Typs in städtischer Umgebung entspricht; ein zweiter Wert des Zählers, der größer als der erste Wert ist, auf im Voraus definierte Weise einer Sperranforderung einer Regeneration des Typs Desulfatierung auf der Landstraße entspricht; ein dritter Wert des Zählers, der größer als der zweite Wert ist, auf im Voraus definierte Weise einer Sperranforderung einer Regeneration des Desulfatierungstyps durch Antizipation auf der Autobahn entspricht; ein vierter Wert des Zählers, der größer als der dritte Wert ist, auf im Voraus definierte Weise einer Sperranforderung einer Regeneration des Desulfatierungstyps durch thermische Antizipation entspricht; und ein fünfter Wert des Zählers, der größer ist als der vierte Wert, auf im Voraus definierten Weise einer Sperranforderung einer Regeneration des Denitrifizierungstyps oder DeNox entspricht.

6. Verfahren nach einem der Ansprüche 3 bis 5, wobei die Sperranforderung, die einem gegebenen Wert des Zählers entspricht, mit wenigstens einer der Sperranforderungen zusammengeführt wird, die wenigstens einem Wert des Zählers entspricht, der kleiner als dieser gegebene Wert des Zählers ist.

7. Verfahren nach einem der Ansprüche 1 bis 6, wobei der Funktionsparameter der Maschine die vom Fahrzeug gefahrene Strecke ist.

8. Verfahren nach einem der Ansprüche 1 bis 7, wobei der Zähler als Werte positive ganze Zahlen verwendet.

9. Verwendung des Verfahrens wie in einem der Ansprüche 1 bis 8 beschrieben, um das Intervall zwischen zwei aufeinander folgenden Entleerungen von Schmieröl der Maschine auf einen vorgegebenen minimalen Wert mit Hilfe des Funktionsparameters der Maschine aufrecht zu erhalten, wobei die Verwendung bei jeder Entleerung von Schmieröl die Initialisierung des Zählers auf seinen Basiswert und eine Rücksetzung auf null des Verdünnungsanteils umfasst.
